(19) Europäisches Patentamt
European Patent Office
Office européen des brevets

(11) EP 0 573 485 B1

(12) EUROPÄISCHE PATENTSCHRIFT

(45) Veröffentlichungstag und Bekanntmachung des Hinweises auf die Patenterteilung:
**18.12.1996 Patentblatt 1996/51**

(21) Anmeldenummer: **92905337.9**

(22) Anmeldetag: **25.02.1992**

(51) Int Cl.$^6$: **C08G 69/32**, C08G 69/26

(86) Internationale Anmeldenummer:
**PCT/EP92/00392**

(87) Internationale Veröffentlichungsnummer:
**WO 92/14775 (03.09.1992 Gazette 1992/23)**

# (54) AROMATISCHE COPOLYAMIDE, VERFAHREN ZU IHRER HERSTELLUNG UND IHRE VERWENDUNG ZUR HERSTELLUNG VON GEFORMTEN GEBILDEN

AROMATIC COPOLYAMIDES, PROCESS FOR PRODUCING THE SAME AND THEIR USE FOR PRODUCING SHAPED STRUCTURES

COPOLYAMIDES AROMATIQUES, LEUR PROCEDE DE PRODUCTION ET LEUR UTILISATION POUR PRODUIRE DES STRUCTURES FACONNEES

(84) Benannte Vertragsstaaten:
**BE CH DE FR GB IT LI NL**

(30) Priorität: **26.02.1991 DE 4105950**

(43) Veröffentlichungstag der Anmeldung:
**15.12.1993 Patentblatt 1993/50**

(73) Patentinhaber: **HOECHST AKTIENGESELLSCHAFT
65926 Frankfurt am Main (DE)**

(72) Erfinder:
- **DELIUS, Ulrich, M.
D-6000 Frankfurt am Main 71 (DE)**
- **KREUDER, Willi
D-6500 Mainz 21 (DE)**
- **WIESNER, Matthias
D-6500 Mainz 1 (DE)**

(56) Entgegenhaltungen:
**EP-A- 0 256 606**

- **Chemical Abstracts, Band 83, Nr. 14, 6. Oktober 1975, Columbus, Ohio, US; P.M. Heertjes et al.: "Polycondensation products of 2,5-furandicarboxylic acid", siehe Seite 2, Zusammenfassung 114977t, & Delft Progr. Rep. Ser. A, 1974, 1(2), 59-63**
- **Chemical Abstracts, Band 75, Nr. 16, 18. Oktober 1971, Columbus, Ohio, US; M.G. Grishkova et al.: "Synthesis of 2,5-furandicarboxylic acid-based polyamides by equilibrium polycondensation", siehe Seite 1, Zusammenfassung 98835x, & Fiz. Khim. Khim. Tekhnol. 1969, 240-4**
- **Chemical Abstracts, Band 75, Nr. 6, 9. August 1971, Columbus, Ohio, US; K.A. Malyshevskaya et al.: "Synthesis of mixed polyamides based on 2,5- furandicrboxylic acid", siehe Seite 2, Zusammenfassung 36732c, & Fiz. Khim. Khim. Tekhnol., Sb. Mater, Nauch.-Tekh. Konf. Rab. Nauki Proizvod. 1968, (Publ. 1969), 237-9**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 573 485 B1

Printed by Jouve, 75001 PARIS (FR)

**Beschreibung**

Aromatische Polyamide sind bekannt als Materialien mit hoher mechanischer, chemischer und thermischer Stabilität. Fasern und Folien aus diesen Materialien zeigen hohe Festigkeiten und hohe Anfangsmoduli (Elastizitätsmodul), was sie für technische Einsatzgebiete, z. B. zur Verstärkung von Kunststoffen oder als Filtermaterialien, besonders geeignet macht.

Die Herstellung derartiger Polymere erfolgt üblicherweise durch Umsetzung aromatischer Diamine mit aromatischen Dicarbonsäurechloriden in aprotischen organischen Lösungsmitteln vom Amid-Typ, beispielsweise N,N-Dimethylacetamid (DMAc) oder N-Methylpyrrolidon (NMP), wobei zur Verbesserung der Löslichkeit gegebenenfalls Alkali- oder Erdalkalichloride zugesetzt werden und der gebildete Chlorwasserstoff anschließend beispielsweise mit Calciumoxid neutralisiert wird (DE - A - 19 29 713, DE - B - 22 19 703).

Die Herstellung und Verarbeitung solcher Polyamide erweist sich jedoch als sehr aufwendig. Wegen ihrer schlechten Löslichkeit in organischen Lösungsmitteln, auch noch in Gegenwart von organischen Salzen wie Lithiumchlorid oder Calciumchlorid als Lösungsvermittler, fällt das Polymer bereits kurz nach seiner Bildung aus dem Reaktionsmedium aus. Es muß isoliert, gewaschen und getrocknet und dann erneut in einem für die Verarbeitung geeigneten Lösungsmittel gelöst werden.

Das Verspinnen dieser Polymere erfolgt bevorzugt aus konzentrierter Schwefelsäure, was jedoch besondere Probleme bei der Handhabung (Arbeitssicherheit, Korrosion) und bei der Entsorgung verursacht.

Schwerlösliche Polyamide, wie Poly(p-phenylen-terephthalamid), besitzen von den aromatischen Bausteinen ausgehende parallel oder koaxial zueinander angeordnete Bindungen. Zur Erzielung einer besseren Löslichkeit, besteht die Möglichkeit Comonomere einzusetzen, die zur Unterbrechung des parallelen bzw. koaxialen Bindungsverlaufs entlang der Polymerketten dienen sollen.

So lassen sich aromatische Copolyamide aus Terephthalsäure, p-Phenylendiamin und 3,4'-Diaminodiphenylether aus den bei dem Herstellungsprozess anfallenden Lösungen von NMP zu Fasern und Folien mit guten Festigkeiten verarbeiten. Die Synthese von 3,4'-Diaminodiphenylether sowie dessen Reinigung ist jedoch aufgrund der asymmetrischen Struktur sehr aufwendig. Technisch einfachere Modifizierungen von Poly(p-phenylen-terephthalamid), beispielsweise durch den Einbau von meta-Verknüpfungseinheiten (z.B. m-Phenylendiamin) haben eine Verschlechterung der mechanischen Eigenschaften zur Folge (DE - B - 30 07 063).

Es ist ferner bekannt, daß sich Polyamide aus p-Phenylendiamin und 2,5-Furandicarbonsäurederivaten aus NMP unter Zusatz von Lithiumchlorid zu Fasern und Folien verarbeiten lassen (EP - A - 0 256 606). Die Monomere werden hierbei direkt in Gegenwart von Phosphorigsäure-triphenylester und Pyridin miteinander polymerisiert.
Die enthaltenen Polymere besitzen inhärente Viskositäten von über 1,5 dl/g (gemessen bei 30°C in 98 %iger Schwefelsäure).

Ein alternatives Syntheseverfahren zur Herstellung von Poly(p-phenylen-2,5-furandicarbonamid), welches ohne ökologisch bedenkliche bzw. oftmals als giftig angesehene Zusätze, wie Phosphorverbindungen oder Pyridin auskommt, wird in Polymer Communications, 26, 246 - 249 (1985) beschrieben. Die auf diesem Wege erhaltenen Produkte besitzen jedoch im Gegensatz zu den über eine direkte Polykondensation erhaltenen Produkten wesentlich niedrigere inhärente Viskositäten.

Der vorliegenden Erfindung liegt daher die Aufgabe zugrunde, ein aromatisches Copolyamid zu finden, welches vergleichbar gute mechanische Eigenschaften wie Poly(p-phenylen-terephthalamid) besitzt, eine sehr gute Löslichkeit in organischen Lösungsmitteln aufweist und sich aus diesen Lösungen direkt zu qualitativ hochwertigen Fasern und Folien verarbeiten läßt, wobei das Verfahren zur Herstellung dieser Polyamide ökonomisch und ökologisch günstig sein soll und als Ausgangsstoffe leicht zugängliche Diamine und Dicarbonsäurederivate eingesetzt werden sollen.

Die Aufgabe wird durch die vorliegende Erfindung gelöst. Die Erfindung betrifft ein aromatisches in organischen Lösungsmitteln lösliches Copolyamid, welches zu mindestens 90 Mol % die wiederkehrenden Struktureinheiten (I), (II) und (III)

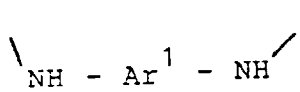

(I)

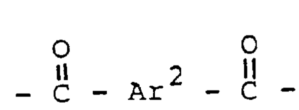

(II)

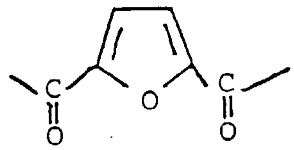

(III)

und 0 bis 5 Mol % Endgruppen der Struktureinheiten (IV)

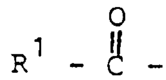

(IV)

aufweist. Die Symbole $Ar^1$, $Ar^2$, und $R^1$ haben folgende Bedeutung:

$Ar^1$ bedeutet einen zweiwertigen mit gegebenenfalls ein oder zwei verzweigten oder unverzweigten $C_1$-$C_4$-Alkyl- oder $C_1$-$C_4$-Alkoxyresten, Aryl- oder Aryloxyresten substituierten oder unsubstituierten gegebenenfalls -$SO_2$- oder -CO- verbrückten, ein- bis vierkernigen aromatischen Rest, wobei die Amingruppen sich an nichtbenachbarten Ringkohlenstoffatomen befinden,

$Ar^2$ bedeutet einen zweiwertigen mit gegebenenfalls ein oder zwei verzweigten oder unverzweigten $C_1$-$C_4$-Alkyl- oder Alkoxyresten, Aryl- oder Aryloxyresten, $C_1$-$C_6$-Perfluoralkyl- oder Perfluoralkoxyresten oder mit Fluor, Chlor oder
Brom substituierten oder unsubstituierten aromatischen Rest.

$Ar^1$ und $Ar^2$ können unabhängig voneinander gleich oder verschieden sein.

$R^1$ steht für eine gegebenenfalls halogensubstituierte $C_1$-$C_{10}$-Alkylgruppe oder einen Rest der Struktur (V)

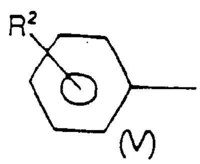

(V)

worin $R^2$ Wasserstoff oder Halogen oder ein verzweigter oder unverzweigter Alkyl- oder Alkoxyrest oder ein Aryl- oder Aryloxyrest ist. Die Summe der molaren Anteile von (II) und (III) zum molaren Anteil von (I) stehen hierbei im Verhältnis von 0,9 : 1 bis 1,1 : 1, wobei gleichzeitig die molaren Anteile von (II) und (III) zueinander im Verhältnis von 60 : 40 bis 10: 90 stehen.

Zur Herstellung der Copolyamide gemäß der Erfindung eignen sich folgende Verbindungen:

a.) Diaminderivate der Formel (VI)

$$H_2N\text{-}Ar^1\text{-}NH_2 \qquad \text{(VI)}$$

wie beispielsweise
para-Phenylendiamin
2-Methyl-para-Phenylendiamin
3,3'-Dimethylbenzidin
Naphthylen-2,6-diamin
4,4'-Diaminodiphenylether
1,4-Bis-(4-aminophenoxy)-benzol
1,4-Bis-(4-aminophenylisopropyl)-benzol

4,4'-Diaminodiphenylsulfon

b.) Dicarbonsäurederivate der Formel (VII)

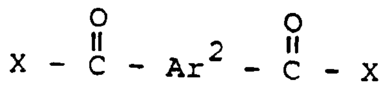

(VII)

wobei X eine Hydroxylgruppe oder Chlor darstellt.
Zu Verbindungen der Formel (VII) zählen zum Beispiel

Terephthalsäure
Terephthalsäuredichlorid
Isophthalsäure
Isophthalsäuredichlorid
2-Chlorterephthalsäure
2-Chlorterephthalsäurechlorid
Naphthalin-2,6-dicarbonsäure
Naphthalin-2,6-dicarbonsäurechlorid

wobei bevorzugt Dicarbonsäurechloride verwendet werden und

c.) Furandicarbonsäurederivate der Formel (VIII)

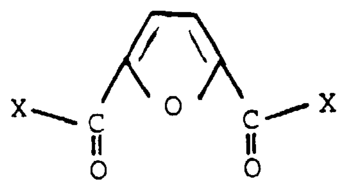

(VIII)

(X hat die oben genannte Bedeutung)

Beispiele für Verbindungen der Formel (VIII) sind:

2,5-Furandicarbonsäure und
2,5-Furandicarbonsäurechlorid

Die Herstellung der erfindungsgemäßen aromatischen Copolyamide erfolgt durch Lösungskondensation von Mischungen aus (VII) und (VIII) mit (VI) in bekannten Polyamidlösungsmitteln. Unter Polyamidlösungsmitteln werden polare aprotische Lösungsmittel verstanden, die Amidbindungen enthalten, wie z. B. Dimethylacetamid (DMAc), Dimethylformamid (DMF) und Lactame, wie beispielsweise N-Methylpyrrolidon N-Methylcaprolactam. Die Komponenten (VII) und (VIII) stehen bei dem erfindungsgemäßen Verfahren in einem molaren Verhältnis von 60 : 40 bis 10 : 90 zueinander, wobei deren Anteil, bezogen auf den Anteil der Komponente (VI), 90 bis 110 Mol-%, vorzugsweise 100 Mol-%, beträgt. Die Säurechloride (VII) und (VIII) werden dem Reaktionsansatz bevorzugt als homogene Mischung, besonders bevorzugt als Lösung der beiden Komponenten in einem Teil des für die Polykondensation verwendeten Lösungsmittels zugegeben. Die Komponenten (VI), (VII) und (VIII) werden bei Temperaturen im Bereich von -20 bis 120°C, vorzugsweise im Bereich von 0 bis 100°C, besonders bevorzugt im Bereich von 10 bis 90°C, miteinander polykondensiert. Gegebenenfalls werden diesen Lösungsmitteln in bekannter Weise zur Erhöhung der Lösefähigkeit, bzw. zur Stabilisierung der Copolyamidlösungen, Halogenidsalze von Metallen der ersten und/oder zweiten Gruppe des periodischen Systems der Elemente zugesetzt. Bevorzugte Zusätze sind Calciumchlorid und/oder Lithiumchlorid.

Die endständigen Aminogruppen des aromatischen Copolyamids können durch Zugabe eines Monocarbonsäurechlorids oder -Anhydrids der Formel (IX)

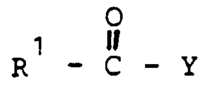

(IX)

worin Y = Chlor oder eine Gruppe

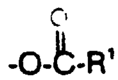

ist und $R^1$ die vorstehend genannte Bedeutung hat, abgesättigt werden. Als derartige Kettenverschlußmittel eignen sich beispielsweise Benzoylchlorid, Fluorbenzoylchlorid, Diphenylcarbonsäurechlorid, Phenoxybenzoylchlorid, Essigsäureanhydrid, Chloressigsäureanhydrid und Propionsäureanhydrid.

Derartige Kettenverschlußmittel können gegebenenfalls am aromatischen Kern substituiert sein, vorzugsweise mit Fluor- oder Chloratomen. Bevorzugt wird Benzoylchlorid eingesetzt.

Die Polykondensationsreaktion wird vorzugsweise so ausgeführt, daß nach Abschluß der Reaktion 2 bis 20, vorzugsweise 5 bis 15 Gew.-% an Polykondensat in der Lösung vorliegen.

Die Absättigung der an den Enden der Polymerkette befindlichen Aminogruppen erfolgt üblicherweise nachdem die Lösung des gebildeten Polymers die gewünschte Viskosität erreicht hat, durch Zugabe eines monofunktionellen Säurechlorids oder eines Säureanhydrids der Formel (IX).

In einer bevorzugten Ausführungsform des Herstellungsverfahrens wird dem Reaktionsgemisch zur Neutralisation des bei der Reaktion entstehenden Chlorwasserstoffs eine mindestens äquivalente Menge eines oder mehrerer säurebindender anorganischer oder organischer Zusatzstoffe zugegeben. Beispiele für derartige Zusätze sind Alkali- und Erdalkalioxide und -hydroxide, z.B. Lithiumhydroxid und Calciumoxid sowie Verbindungen der Formeln (X), (XI) und (XII), wie Propylenoxid, Ammoniak, Triethylamin und Pyridine bzw. in 2-, 3- oder 4-Stellung substituierte Pyridine.

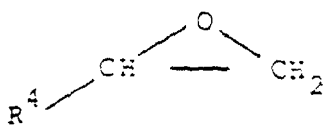

(X)

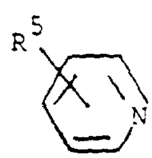

(XI)

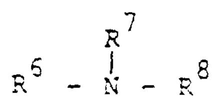

(XII)

$R^4$, $R^5$, $R^6$, $R^7$ und $R^8$ sind in Verbindungen der Formeln (X), (XI) und (XII) gleich oder verschieden und unabhängig voneinander Wasserstoff oder eine verzweigte oder unverzweigte Alkylgruppe, vorzugsweise eine $C_1$ bis $C_3$ Alkylgruppe. Für den Fall, daß Lithiumhydroxid, Calciumoxid oder Ammoniak verwendet wird, wird das Neutralisationsmittel bevorzugt erst nach Ende der Polykondensation zugegeben.

In einer weiteren bevorzugten Ausführungsform wird eine Verbindung der Formel (VI) und eine mindestens äquivalente Menge, vorzugsweise 100 bis 120 Mol-% bezogen auf (VI), einer der Verbindungen (X), (XI) oder (XII) mit einer Mischung von (VII) und (VIII) polykondensiert und nach Abschluß der Polykondensation eine ebenfalls mindestens äquivalente Menge eines Alkali- oder Erdalkalioxids oder - hydroxids zugegeben.
Auf diese Weise wird die zuerst zugegebene säurebindende Komponente (X), (XI), (XII) zum größten Teil wieder freigesetzt und kann, beispielsweise durch Destillation, wieder zurückgewonnen werden.

Gegebenenfalls werden den Lösungen geeignete Mengen an Additiven zugesetzt. Beispiele sind Lichtstabilisatoren, Antioxidationsmittel, Flammschutzmittel, Antistatika, Farbstoffe, Farbpigmente oder Füllstoffe. Zur Isolierung der Copolyamide können die Lösungen mit einem Fällungsmittel versetzt und das coagulierte Produkt abfiltriert werden. Als Fällungsmittel eignen sich beispielsweise: Wasser, vorzugsweise mit Säurezusätzen, wie Salzsäure oder Essigsäure, Gemische aus Wasser und aprotischen Lösungsmitteln, wie DMF, DMAc und NMP sowie Methanol.

Die intrinsischen Viskositäten (= Staudinger Index) liegen bei den Copolyamiden, die nach dem erfindungsgemäßen Verfahren hergestellt wurden, im Bereich von 1,0 bis 5,0 dl/g, bevorzugt im Bereich von 1,0 bis 3,0 dl/g.

Unter intrinsischer Viskosität ($[\eta]_0$) versteht man folgende Beziehung:

$$[\eta]_0 = \lim_{c \to O} \left(\ln \frac{\eta\ rel}{c}\right)$$

η rel = relative Viskosität
c = Lösungskonzentration in g/dl

Zur Herstellung von geformten Gebilden aus den erfindungsgemäßen Copolyamiden werden die erhaltenen Lösungen filtriert, entgast und in bekannter Weise zu Fäden, Fasern, Folien, Membranen oder auch Beschichtungen verarbeitet. Beispielsweise können Fasern durch Einsatz einer Naßspinnanlage hergestellt werden, wo die Polymerlösung durch geeignete DüSen in ein Fällbad ausgepreßt wird, die erhaltenen Fäden durch Waschbäder gezogen und bei höherer Temperatur verstreckt werden. Als Fällbäder eignen sich wäßrige Lösungen von Amid-Lösungsmitteln wie N-Methylpyrrolidon, u. U. auch wäßrige Salzlösungen wie Calciumchloridlösungen.

Bei der Herstellung von Fäden, Fasern und Folien beinhaltet die Verstreckung eine geringe Naßverstreckung und eine höhere Kontaktverstreckung. Zur Kontaktverstreckung werden die Filamente beispielsweise über heiße Platten ("Bügeleisen") mit einer Oberflächentemperatur im Bereich von 250°C bis 450°C gezogen.

Beispiele:

Die intrinsischen Viskositäten wurden in NMP unter Zusatz von 2,0 % Lithiumbromid bei 25°C gemessen.

Beispiel 1

Aromatisches Copolyamid aus 100 Mol-% p-Phenylendiamin, 50 Mol-% 2,5-Furandicarbonsäurechlorid und 50 Mol-% Terephthalsäuredichlorid.

In einem 300 ml fassenden Reaktionsgefäß wurden eine Lösung von 13,52 g p-Phenylendiamin (0,125 Mol) und 9,2 g Lithiumchlorid in 175 ml N-Methylpyrrolidon (NMP) sowie 34,95 g 2-Picolin vorgelegt. Bei einer Temperatur von +5°C wurde unter Rühren und $N_2$-Überlagerung eine Lösung von 12,15 g 2,5-Furandicarbonsäuredichlorid (0,063 Mol) und 12,79 g Terephthalsäuredichlorid (0,063 Mol) in 44 ml NMP zugesetzt. Alle Substanzen waren vorher sorgfältig gereinigt und getrocknet worden. Das Gemisch wurde unter Rühren innerhalb von 30 Min. auf 70°C erwärmt und 120 Min. bei dieser Temperatur nachkondensiert. Anschließend wurden 0,7 g Benzoylchlorid (0,005 Mol) zugesetzt und für weitere 30 Minuten gerührt. Die resultierende Lösung wurde filtriert und in einen Überschuß 2 %iger Salzsäure eingetropft. Das ausgefallene Polymer wurde 4mal mit 70°C warmen Wasser und 3mal mit Aceton gewaschen und 24 Stunden bei 120°C im Vakuum getrocknet. Die intrinsische Viskosität betrug 2,05.

Beispiel 2

Aromatisches Copolyamid aus 100 Mol-% p-Phenylendiamin, 65 Mol-% 2,5-Furandicarbonsäurechlorid und 35 Mol-% Terephthalsäuredichlorid.

Die Polykondensation nach Beispiel 1 wurde wiederholt mit dem Unterschied, daß eine Lösung von 15,99 g Furandicarbonsäurechlorid (0,083 Mol) und 9,06 g Terephthalsäurechlorid (0,045 Mol) in 43 ml NMP anstelle der oben aufgeführten Lösung dieser Verbindungen verwendet wurde. Die intrinsische Viskosität des Polymers betrug 1,25.

Beispiel 3

Aromatisches Copolyamid aus 100 Mol-% p-Phenylendiamin, 85 Mol-% 2,5-Furandicarbonsäurechlorid und 15 Mol-% Terephthalsäuredichlorid.

In einem 3 l fassenden Reaktionsgefäß wurde eine Lösung von 108,1 g p-Phenylendiamin (1,0 Mol) und 73,6 g Lithiumchlorid in 1400 ml NMP sowie 279,4 g 2-Methylpyridin (3,0 Mol) vorgelegt. Bei einer Temperatur von 5°C wurde unter Rühren in einer Stickstoffatmosphäre eine Lösung von 16,60 g Furandicarbonsäurechlorid (0,86 Mol) und 31,1 g Terephthalsäuredichlorid (0,153 Mol) in 327 ml N-Methylpyrrolidon zugegeben. Alle Komponenten waren vorher sorgfältig gereinigt und getrocknet worden. Das Gemisch wurde unter Rühren und Überlagerung mit Stickstoff innerhalb von 20 Minuten auf 70°C erwärmt und 90 Min. bei dieser Temperatur nachkondensiert. Anschließend wurden 5,6 g Benzoylchlorid (0,04 Mol) zugesetzt. Nach weiteren 30 Min. Reaktionszeit wurde aus der resultierenden Lösung das Polymer isoliert, wie unter Beispiel 1 beschrieben. Die intrinsische Viskosität betrug 1,06.

Beispiel 4

Aromatisches Copolyamid aus 100 Mol-% p-Phenylendiamin, 50 Mol-% 2,5-Furandicarbonsäuredichlorid und 50 Mol-% Terephthalsäuredichlorid

In einem 3 l fassenden Reaktionsgefäß wurde eine Lösung von 81,1 g p-Phenylendiamin (0,75 Mol) und 81 g Lithiumchlorid in 2000 ml N-Methylpyrrolidon (NMP) vorgelegt. Bei einer Temperatur von 5°C wurde unter Rühren in einer Stickstoffathmosphäre eine Lösung von 72,37 g 2,5-Furandicarbonsäuredichlorid (0,375 Mol) und 76,13 g Terephthalsäuredichlorid (0,375 Mol) in 200 g NMP zugegeben. Alle Komponenten waren vorher sorgfältig gereinigt und getrocknet worden.

Das Gemisch wurde unter Rühren und Stickstoff-Überlagerung innerhalb von 60 min auf 70°C erwärmt und 90 min bei dieser Temperatur weiterkondensiert. Anschließend wurden 5,6 g Benzoylchlorid (0,04 Mol) und nach weiteren 20 min eine Suspension von 49,1 g Calciumoxid (0,90 Mol) in 30 ml NMP zugesetzt. Es erfolgten 20 min Nachrühren bei 70°C, Filtration und Entgasung. Die resultierende Lösung enthielt 6,6 Gew.-% Copolyamid, 3,05 Gew.-% Lithiumchlorid und 3,13 Gew.-% Calciumchlorid.

Ein Teil der Lösung wurde in einen Überschuß Wasser eingetropft. Das ausgefallene Polymer wurde 4 mal mit 70°C warmem Wasser und 3 mal mit Aceton gewaschen und 24 Stunden bei 120°C im Vakuum getrocknet. Die intrinsische Viskosität betrug 2,71.

Die restliche Lösung wurde naß zu Fasern gesponnen. Dazu wurde sie aus einer Düse mit 100 Öffnungen von jeweils 0,06 mm in ein waagrecht angeordnetes Koagulationsbad, bestehend aus einer 73°C warmen Lösung von NMP in Wasser, mit einer Geschwindigkeit von 16,0 m/min ausgesponnen. Die erhaltenen Fäden wurden durch zwei Wasserbäder, eine Waschmaschine, über eine Trockengalette von 178°C und schließlich über ein Bügeleisen von 407°C mit einer Geschwindigkeit von 42 m/min abgezogen.

Der Einzelfilamenttiter betrug 0,36 dtex (DIN 53830) die feinheitsbezogene Höchstzugkraft 26 cN/tex bei einer Höchstzugkraftdehnung von 1,1 % (DIN 53834, Teil 1).

Das Anfangsmodul betrug 28 N/tex. Er wurde aus der Steigung des Kraft-Dehnungs-Diagramms zwischen 0,3 und 0,5 % Dehnung ermittelt.

Vergleichsbeispiel 1

Aromatisches Polyamid aus 100 Mol-% p-Phenylendiamin und 100 Mol-% 2,5-Furandicarbonsäurechlorid.

Die Polykondensation nach Beispiel 1 wurde wiederholt, jedoch mit dem Unterschied, daß eine Lösung von 24,12 g Furandicarbonsäuredichlorid (0,125 Mol) in 37 ml N-Methylpyrrolidon anstelle der Lösung des Gemisches von Furandicarbonsäredichlorid und Terephthalsäuredichlorid verwendet wurde. Die intrinsische Viskosität des Polymers betrug lediglich 0,49.

Vergleichsbeispiel 2

Aromatisches Polyamid aus 100 Mol-% p-Phenylendiamin und 100 Mol-% 2,5-Furandicarbonsäure durch direkte Polykondensation mit Triphenylphosphit und 3-Methylpyridin.

In einem 2 l fassenden Reaktionsgefäß wurden 12,98 g p-Phenylendiamin (0,120 Mol), 19,27 g Furandicarbonsäure (0,123 Mol) und 82 g Triphenylphosphit (0,264 Mol) vorgelegt. In einer Stickstoffatmosphäre wurden 134 g 2-Methylpyridin (1,44 Mol) und 600 ml NMP zugegeben, in welchem vorher 9,2 g Lithiumchlorid und 35 g Calciumchlorid gelöst worden waren. Alle Substanzen waren vorher sorgfältig gereinigt und getrocknet worden. Unter Rühren wurde das Gemisch für 35 Stunden auf 90°C erwärmt. Die resultierende Lösung wurde nach Erhalten in 6 1 2 %ige Salzsäure eingerührt. Das ausgefallene Polymer wurde 4mal mit 70°C warmem Wasser und 3mal mit Aceton gewaschen und für 24 Stunden bei 120°C im Vakuum getrocknet.
Die intrinsische Viskosität betrug lediglich 0,33.

Vergleichsbeispiel 3

Aromatisches Copolyamid aus 100 Mol-% p-Phenylendiamin, 15 Mol-% 2,5-Furandicarbonsäurechlorid und 85 Mol-% Terephthalsäuredichlorid.

Die Polykondensation nach Beispiel 1 wurde wiederholt mit dem Unterschied, daß 3,69 g 2,5-Furandicarbonsäurechlorid (0,019 Mol) und 21,60 g Terephthalsäuredichlorid (0,106 Mol) eingesetzt wurden. Im Gegensatz zu Beispiel 1 bildete das Reaktionsgemisch keine klare Lösung, sondern einen gelben pastösen Brei. Nachdem die Temperatur auf 80°C erhöht worden war, wurden die im Ansatz befindliche Menge an Lithiumchlorid um 14,55 g erhöht (insgesamt 9,5 Gew.-%, bezogen auf NMP). Anschließend lag immer noch ein Brei aus ungelöstem Material vor. Das Reaktionsgemisch wurde in einen Überschuß 2 %iger Salzsäure eingerührt. Der resultierende Feststoff wurde weiterbehandelt,

wie unter Beispiel 1 beschrieben. Die Messung der intrinsischen Viskosität ergab einen Wert von lediglich 0,2.

## Patentansprüche

1. Aromatisches, in organischen Lösungsmitteln lösliches Copolyamid, dadurch gekennzeichnet, daß es zu mindestens 90 Mol-% die wiederkehrenden Struktureinheiten (I), (II) und (III)

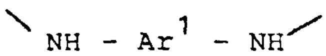

(I)

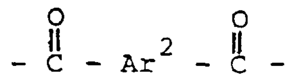

(II)

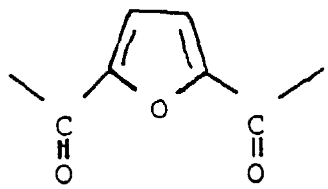

(III)

und 0 bis 5 Mol-% Endgruppen der Struktureinheiten (IV)

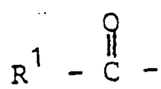

(IV)

aufweist, worin die Symbole $Ar^1$, $Ar^2$ und $R^1$ folgende Bedeutung haben:

$Ar^1$ bedeutet einen zweiwertigen mit gegebenenfalls ein oder zwei verzweigten oder unverzweigten $C_1$ bis $C_4$ Alkyl- oder Alkoxyresten, Aryl- oder Aryloxyresten substituierten oder unsubstituierten gegebenenfalls $-SO_2-$ oder -CO- verbrückten ein- bis vierkernigen aromatischen Rest, wobei die Amingruppen sich an nicht benachbarten Ringkohlenstoffatomen befinden;

$Ar^2$ bedeutet einen zweiwertigen mit gegebenenfalls ein oder zwei verzweigten oder unverzweigten $C_1$-$C_4$ Alkyl- oder $C_1$-$C_4$ Alkoxyresten, Aryl- oder Aryloxyresten, $C_1$ bis $C_6$ Perfluoralkyl- oder Perfluoralkoxyresten oder mit Fluor, Chlor, Brom oder Jod substituierten oder unsubstituierten aromatischen Rest, wobei $Ar^1$ und $Ar^2$ gleich oder verschieden und unabhängig voneinander sind und

$R^1$ für eine gegebenenfalls halogensubstituierte $C_1$ bis $C_{10}$ Alkylgruppe oder einen Rest der Struktur (V) steht,

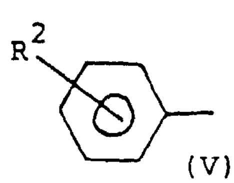

(V)

worin $R^2$ Wasserstoff oder Halogen oder ein verzweigter oder unverzweigter Alkyl- oder Alkoxyrest oder ein Aryl- oder Aryloxyrest ist und die Summe der molaren Anteile von (II) und (III) zum molaren Anteil von (I) im Verhältnis von 0,9 : 1 bis 1,1 zu 1 stehen und gleichzeitig die molaren Anteile von (II) und (III) zueinander im Verhältnis von 60 : 40 bis 10 : 90 stehen.

**2.** Aromatisches Copolyamid nach Anspruch 1, dadurch gekennzeichnet, daß dieses eine intrinsische Viskosität im Bereich von 1,0 bis 5,0 dl/g besitzt.

**3.** Aromatisches Copolyamid nach Anspruch 1, dadurch gekennzeichnet, daß es als Struktureinheit II, Einheiten enthält, die sich von Terephthalsäure und/oder Isophthalsäure ableiten.

**4.** Aromatisches Copolyamid nach Anspruch 1, dadurch gekennzeichnet, daß es als Struktureinheit I, Einheiten enthält, die sich von einem substituierten oder unsubstituierten Phenylendiamin ableiten.

**5.** Verfahren zur Herstellung des aromatischen Copolyamids gemäß Anspruch 1, dadurch gekennzeichnet, daß die Komponenten (VI), (VII) und (VIII).

$H_2N - Ar^1 - NH_2$

(VI)

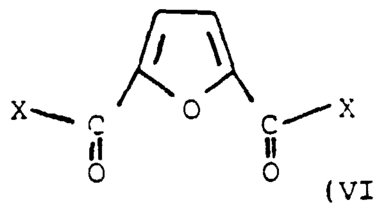

(VIII)

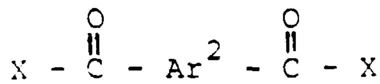

(VII)

worin $Ar^1$ und $Ar^2$ die in Anspruch 1 angegebene Bedeutung haben und X für ein Chloratom oder eine Hydroxylgruppe steht, in einem organischei lösungsmittel, bei einer Temperatur im Bereich von -20 bis +120°C, miteinander polykondensiert werden, wobei die Komponenten (VII) und (VIII) in einem molaren Verhältnis von 60 : 40 bis 10 : 90 zueinander stehen und deren Anteil, bezogen auf den Anteil der Komponente (I), 90 bis 110 Mol-% beträgt.

**6.** Verfahren nach Anspruch 5, dadurch gekennzeichnet, daß die endständigen Aminogruppen des aromatischen Copolyamids durch Zugabe eines Monocarbonsäurechlorids oder Anhydrids der Formel (IX),

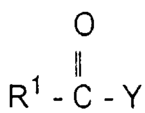

(IX)

wobei Y Chlor oder eine Gruppe

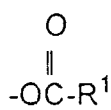

bedeutet und $R^1$ die vorstehend genannte Bedeutung hat, abgesättigt werden.

**7.** Verfahren nach Anspruch 6, dadurch gekennzeichnet, daß das Monocarbonsäurechlorid oder Anhydrid der Formel (IX) in einer Konzentration, die im Bereich von 0 bis 5 Mol-% liegt, bezogen auf das aromatische Copolyamid, zugegeben wird.

**8.** Verfahren nach Anspruch 5, dadurch gekennzeichnet, daß der Reaktionslösung Halogenidsalze von Metallen der ersten und/oder zweiten Gruppe des periodischen Systems der Elemente zur Löslichkeitssteigerung zugegeben werden.

**9.** Verfahren nach Anspruch 5, dadurch gekennzeichnet, daß als organische Lösungsmittel solche eingesetzt werden, die Amidbindungen enthalten, vorzugsweise Dimethylacetamid, N-Methylpyrrolidon, Dimethylformamid oder N-Methylcaprolactam.

**10.** Verfahren nach Anspruch 5, dadurch gekennzeichnet, daß der Reaktionslösung als säurebindende Zusatzstoffe Alkali- oder Erdalkalioxide oder -hydroxide oder Verbindungen der Formeln (X), (XI) oder (XII) zugesetzt werden,

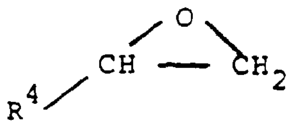
(X)

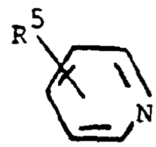
(XI)

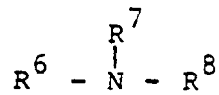
(XII)

worin $R^4$, $R^5$, $R^6$, $R^7$ und $R^8$ gleich oder verschieden sind und unabhängig voneinander Wasserstoff oder eine verzweigte oder unverzweigte Alkylgruppe bedeuten.

**11.** Verfahren nach Anspruch 10, dadurch gekennzeichnet, daß der säurebindende Zusatzstoff zu einer Lösung von (VI) in einem Polyamid-Lösungsmittel gegeben wird und diese Lösung anschließend mit den Komponenten (VII) und (VIII) polykondensiert wird.

**12.** Verfahren nach Anspruch 5 oder 11, dadurch gekennzeichnet, daß nach Ende der Polykondensation ein säurebindender Zusatzstoff, vorzugsweise Lithiumhydroxid oder Calciumoxid, zugesetzt wird.

**13.** Verwendung der Copolyamide gemäß Anspruch 1, zur Herstellung von Formkörpern oder für Beschichtungen.

**14.** Verwendung der Copolyamide gemäß Anspruch 1, zur Herstellung von Fasern, Membranen und Folien.

**Claims**

**1.** An aromatic copolyamide which is soluble in organic solvents, which contains the recurring structural units (I), (II) and (III)

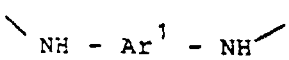
(I)

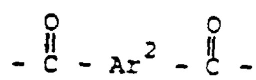
(II)

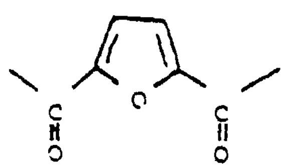
(III)

to the extent of at least 90 mol% and 0 to 5 mol% of end groups of the structural units (IV)

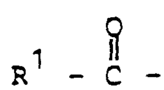
(IV)

in which the symbols $Ar^1$, $Ar^2$ and $R^1$ have the following meaning:

$Ar^1$ is a divalent mono- to tetranuclear aromatic radical which is substituted by optionally one or two branched or unbranched $C_1$ to $C_4$ alkyl or alkoxy radicals, aryl or aryloxy radicals or is unsubstituted and is optionally bridged by $-SO_2-$ or -CO-, the amine groups being on non-adjacent ring carbon atoms;

$Ar^2$ is a divalent aromatic radical which is substituted by optionally one or two branched or unbranched $C_1$-$C_4$ alkyl or $C_1$-$C_4$ alkoxy radicals, aryl or aryloxy radicals or $C_1$ to $C_6$ perfluoroalkyl or perfluoroalkoxy radicals or by fluorine, chlorine, bromine or iodine or is unsubstituted, in which $Ar^1$ and $Ar^2$ are identical or different and independent of one another, and

$R^1$ is an optionally halogen-substituted $C_1$ to $C_{10}$ alkyl group or a radical of the structure (V)

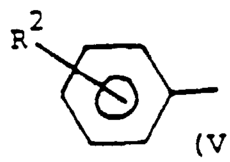

(V)

in which $R^2$ is hydrogen or halogen or a branched or unbranched alkyl or alkoxy radical or an aryl or aryloxy radical and the sum of the molar proportions of (II) and (III) to the molar proportion of (I) are in the ratio of 0.9: 1 to 1.1:1, the molar proportions of (II) and (III) simultaneously being in a ratio to one another of 60:40 to 10:90.

2. An aromatic copolyamide as claimed in claim 1, which has an intrinsic viscosity in the range from 1.0 to 5.0 dl/g.

3. An aromatic copolyamide as claimed in claim 1, which contains units which are derived from terephthalic acid and/or isophthalic acid as structural unit II.

4. An aromatic copolyamide as claimed in claim 1, which contains units which are derived from a substituted or unsubstituted phenylenediamine as structural unit I.

5. A process for the preparation of an aromatic copolyamide as claimed in claim 1, which comprises subjecting components (VI), (VII) and (VIII)

$H_2N$ - $Ar^1$- $NH_2$

(VI)

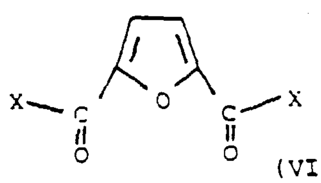

(VIII)

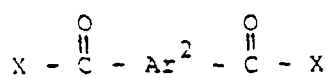

(VII)

in which $Ar^1$ and $Ar^2$ have the meaning given in claim 1 and X is a chlorine atom or a hydroxyl group, to polycondensation with one another in an organic solvent at a temperature in the range from -20 to +120°C, components (VII) and (VIII) being in a molar ratio to one another of 60:40 to 10:90 and the proportion thereof, based on the proportion of component (I), being 90 to 110 mol%.

6. The process as claimed in claim 5, wherein the terminal amino groups of the aromatic copolyamide are saturated by addition of a monocarboxylic acid chloride or anhydride of the formula (IX)

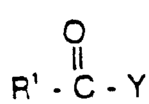

(IX)

in which Y is chlorine or a group

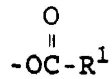

and $R^1$ has the abovementioned meaning.

7. The process as claimed in claim 6, wherein the monocarboxylic acid chloride or anhydride of the formula (IX) is added in a concentration in the range from 0 to 5 mol%, based on the aromatic copolyamide.

8. The process as claimed in claim 5, wherein a halide salt of a metal of the first and/or second group of the Periodic Table of the Elements is added to the reaction solution to increase the solubility.

9. The process as claimed in claim 5, wherein the organic solvent employed is one which contains amide bonds, preferably dimethylacetamide, N-methylpyrrolidone, dimethylformamide or N-methylcaprolactam.

10. The process as claimed in claim 5, wherein an alkali metal oxide or hydroxide or alkaline earth metal oxide or hydroxide or a compound of the formula (X), (XI) or (XII)

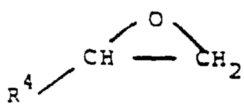
(X)

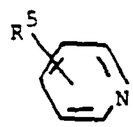
(XI)

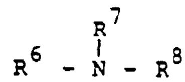
(XII)

in which $R^4$, $R^5$, $R^6$, $R^7$ and $R^8$ are identical or different and independently of one another are hydrogen or a branched or unbranched alkyl group, is added to the reaction solution as an acid-binding additive.

11. The process as claimed in claim 10, wherein the acid-binding additive is added to a solution of (VI) in a polyamide solvent and this solution is then subjected to polycondensation with components (VII) and (VIII).

12. The process as claimed in claim 5 or 11, wherein an acid-binding additive, preferably lithium hydroxide or calcium oxide, is added after the end of the polycondensation.

13. The use of a copolyamide as claimed in claim 1 for the production of shaped articles or for coatings.

14. The use of a copolyamide as claimed in claim 1 for the production of fibers, membranes and films.

**Revendications**

1. Copolyamide aromatique, soluble dans les solvants organiques, caractérisé en ce qu'il comporte au moins 90 % en moles des motifs structuraux répétitifs (I), (II) et (III)

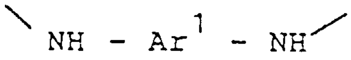

(I)

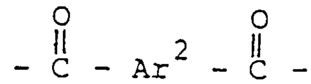

(II)

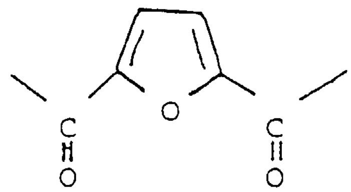

(III)

et de 0 à 5 % en moles de groupes terminaux des motifs structuraux (IV)

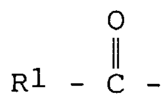

(IV)

où $Ar^1$, $Ar^2$ et $R^1$ ont les significations suivantes :

$Ar^1$ représente un radical aromatique ayant de 1 à 4 noyaux, divalent, éventuellement ponté par $-SO_2-$ ou -CO-, éventuellement substitué par un ou deux radicaux alkyle en $C_1$-$C_4$ ou alcoxy en $C_1$-$C_4$ à chaîne droite ou ramifiée, ou radicaux aryle ou aryloxy, ou non substitué, où les groupes amine se trouvent sur des atomes de carbone nucléaires non voisins ;

$Ar^2$ est un radical aromatique divalent, non substitué, ou éventuellement substitué par un ou deux radicaux alkyle en $C_1$-$C_4$ ou alcoxy en $C_1$-$C_4$ à chaîne droite ou ramifiée, radicaux aryle ou aryloxy, radicaux perfluoralkyle ou perfluoralcoxy en $C_1$ à $C_6$, ou encore par des substituants fluoro, chloro, bromo ou iodo, auquel cas $Ar^1$ et $Ar^2$ sont identiques ou différents et sont indépendants l'un de l'autre, et

$R^1$ représente un groupe alkyle en $C_1$-$C_{10}$ éventuellement halogéné ou un radical de structure (V)

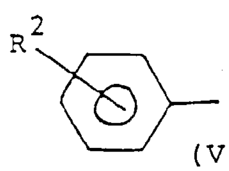

(V)

dans laquelle $R^2$ est un hydrogène ou un halogène, ou encore un radical alkyle ou alcoxy à chaîne droite ou ramifiée, ou un radical aryle ou aryloxy, et le rapport entre la somme des quantités en moles des motifs (II) et (III) et la quantité en moles du motif (I) est de 0,9:1 à 1,1:1, et simultanément le rapport en moles du motif (II) au motif (III) est de 60:40 à 10:90.

**2.** Copolyamide aromatique selon la revendication 1, caractérisé en ce que ce dernier a une viscosité intrinsèque comprise entre 1,0 et 5,0 dl/g.

**3.** Copolyamide aromatique selon la revendication 1, caractérisé en ce qu'il contient en tant que motif structural (II) des motifs qui dérivent de l'acide téréphtalique et/ou de l'acide isophtalique.

**4.** Copolyamide aromatique selon la revendication 1, caractérisé en ce qu'il contient en tant que motif structural (I) des motifs qui dérivent d'une phénylènediamine substituée ou non substituée.

**5.** Procédé pour préparer le copolyamide aromatique selon la revendication 1, caractérisé en ce qu'on soumet à une polycondensation les uns avec les autres, dans un solvant organique, à une température comprise entre -20 et

+120°C, les constituants (VI), (VII) et (VIII)

$H_2N - Ar^1 - NH_2$

(VI)

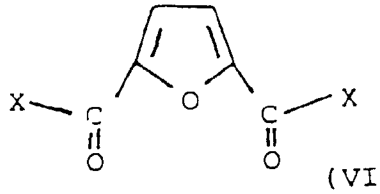

(VIII)

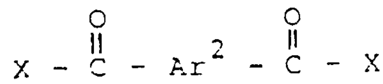

(VII)

dans lesquelles $Ar^1$ et $Ar^2$ ont les significations données dans la revendication 1, et X est un atome de chlore ou un groupe hydroxyle, les constituants (VII) et (VIII) étant présents selon un rapport en moles de 60:40 à 10:90, et leur quantité, rapportée à celle du constituant (I), étant de 90 à 110 % en moles.

**6.** Procédé selon la revendication 5, caractérisé en ce que les groupes amino terminaux du copolyamide aromatique sont saturés par addition d'un chlorure de monocarbonyle ou d'un anhydride monocarboxylique de formule (IX)

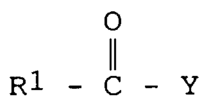

(IX)

dans laquelle Y est le chlore ou un groupe

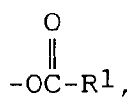

et $R^1$ a les significations données ci-dessus.

**7.** Procédé selon la revendication 6, caractérisé en ce que le chlorure de monocarbonyle ou l'anhydride monocarboxylique de formule (IX) est ajouté à une concentration comprise entre 0 et 5 % en moles par rapport au copolyamide aromatique.

**8.** Procédé selon la revendication 5, caractérisé en ce qu'on ajoute à la solution réactionnelle des halogénures de métaux du premier et/ou du deuxième groupe du Tableau Périodique des Eléments, pour augmenter la solubilité.

**9.** Procédé selon la revendication 5, caractérisé en ce qu'on utilise comme solvants organiques ceux qui contiennent des liaisons amide, de préférence le diméthylacétamide, la N-méthylpyrrolidone, le diméthylformamide ou le N-méthylcaprolactame.

**10.** Procédé selon la revendication 5, caractérisé en ce qu'on ajoute à la solution réactionnelle, comme additifs fixant les acides, des oxydes ou hydroxydes de métaux alcalins ou alcalino-terreux ou des composés de formules (X), (XI) ou (XII)

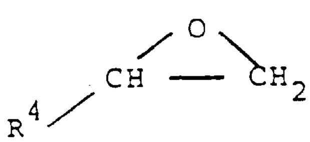

(X)

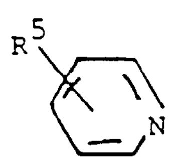

(XI)

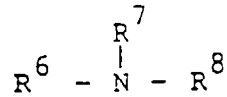

(XII)

dans lesquelles $R^4$, $R^5$, $R^6$, $R^7$ et $R^8$ sont identiques ou différents et, indépendamment les uns des autres, sont des hydrogènes ou des groupes alkyle à chaîne droite ou ramifiée.

**11.** Procédé selon la revendication 10, caractérisé en ce que l'additif fixant les acides est ajouté à une solution du composé (VI) dans un solvant des polyamides, cette solution étant ensuite polycondensée avec les constituants (VII) et (VIII).

**12.** Procédé selon la revendication 5 ou 11, caractérisé en ce que, après la fin de la polycondensation, on ajoute un additif fixant les acides, de préférence l'hydroxyde de lithium ou l'oxyde de calcium.

**13.** Utilisation des copolyamides selon la revendication 1 pour fabriquer des objets façonnés ou des revêtements.

**14.** Utilisation des copolyamides selon la revendication 1 pour fabriquer des fibres, des membranes et des feuilles.